(19) **Europäisches Patentamt / European Patent Office / Office européen des brevets**

(11) **EP 3 211 807 B1**

(12) **EUROPEAN PATENT SPECIFICATION**

(45) Date of publication and mention of the grant of the patent:
**25.03.2020 Bulletin 2020/13**

(21) Application number: **15891502.5**

(22) Date of filing: **12.05.2015**

(51) Int Cl.:
*H04B 7/06* (2006.01)    *H01Q 21/00* (2006.01)
*H01Q 21/30* (2006.01)    *H01Q 23/00* (2006.01)
*H01Q 3/34* (2006.01)

(86) International application number:
**PCT/CN2015/078772**

(87) International publication number:
**WO 2016/179799 (17.11.2016 Gazette 2016/46)**

(54) **DOUBLE-FREQUENCY PHASED ARRAY**

DOPPELFREQUENZ-PHASENARRAY

RÉSEAU À COMMANDE DE PHASE À FRÉQUENCE DOUBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.08.2017 Bulletin 2017/35**

(73) Proprietor: **Huawei Technologies Co., Ltd.**
**Longgang District**
**Shenzhen, Guangdong 518129 (CN)**

(72) Inventor: **YANG, Bo**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
CN-A- 102 610 920    CN-A- 103 916 171
US-A1- 2008 297 273    US-B1- 6 266 011

• **Danial Ehyaie: "Novel Approaches to the Design of Phased Array Antennas", , 26 January 2012 (2012-01-26), XP055152720, Retrieved from the Internet: URL:http://hdl.handle.net/2027.42/89713 [retrieved on 2018-01-08]**
• **M. KIM ET AL: "A heterodyne-scan phased-array antenna", IEEE MICROWAVE AND GUIDED WAVE LETTERS., vol. 9, no. 12, 1 December 1999 (1999-12-01), pages 535-537, XP055438627, US ISSN: 1051-8207, DOI: 10.1109/75.819423**

**Description**

**TECHNICAL FIELD**

The present invention relates to the field of communications technologies, and in particular, to a dual-band phased array.

**BACKGROUND**

A phased array technology is an important branch of an array antenna technology. The phased array technology features an adjustable antenna beam and a high gain of an array antenna. The phased array technology is widely applied in the military field, but its high costs greatly limit development of this technology in the civil field. With development of civil communications, large-capacity communication becomes an important technical breakthrough. In 4G communications, a conventional 6 GHz frequency band is already the limit. To meet future large-capacity communication, it is almost irresistible to discover spectrum resources at a higher frequency band. Currently, a millimeter-wave band has become a research hotspot in the industry because of its wide available frequency bands. The millimeter-wave band has disadvantages such as a large space loss and a poor non line of sight (NLOS for short) capability. Therefore, the phased array technology is re-studied in the field of civil communications.

Danial Ehyaie: "Novel Approaches to the Design of Phased Array Antennas", 26 January 2012, discloses three approaches to design phased array antennas in order to reduce their complexity.

US6266011B1 discloses a phased array antenna system and method employs a phase delay network to provide a scan angle control signal to respective mixers, with phase delays that correspond to the lengths of delay lines between antenna elements. The mixers are connected in circuit with their respective antenna elements so that the scan angle is controlled by the frequency of the scan control signal, independent of the operating signal frequency for the antenna elements. The system can be tailored for either beam transmission or reception, and is applicable to both single and dual delay network versions as well as multi-dimensional arrays. M. KIM ET AL: "A heterodyne-scan phased-array antenna" IEEE MICROWAVE AND GUIDED WAVE LETTERS., vol. 9, no. 12, pages 535-537, discloses a concept for narrow-band frequency beams. The phase shift between neighboring antennas in the array is controlled by changing the frequency of the signal traveling along fixed delay lines in a series feed network.

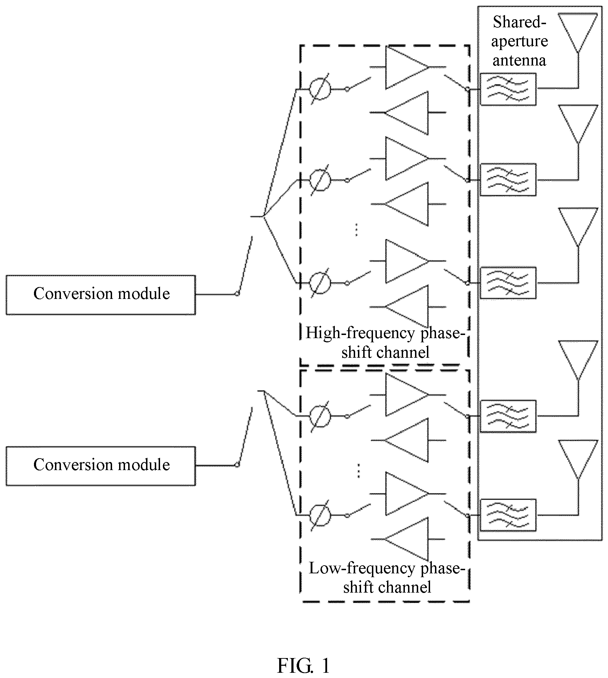

In the modern communications field, a dual frequency band always exists. Therefore, it is irresistible to develop a dual-band communications system. FIG. 1 shows a conventional dual-band phased array. The dual-band phased array includes three parts: a conversion module, configured to convert a baseband signal into a radio frequency signal; a phase-shift channel, configured to perform phase shifting on the radio frequency signal; and an array antenna, configured to radiate the radio frequency signal. The dual-band phased array shown in FIG. 1 is a conventional shunt-fed radio-frequency-phase-shift phased array. To implement dual bands by using this structure, simply, phase-shift channels of two frequency bands are separated, and when a phased array at a frequency band is required, switching to a channel of the frequency band is implemented using a switch. For such a cobbled-together dual-band phased array, its two frequency bands independently occupy resources. Consequently, the system is relatively redundant and system resources are wasted.

**SUMMARY**

In view of this, the present invention provides a dual-band phased array, to resolve a prior-art problem that two frequency bands in a dual-band phased array independently occupy resources, thereby effectively saving system resources. The invention is defined by the independent claim. Embodiments and developments are specified in the dependent claims.

A first aspect of the present invention provides a dual-band phased array, including:

a frequency modulation module, and a phase shift module connected to the frequency modulation module, where
the frequency modulation module is configured to perform frequency modulation between a baseband signal and an intermediate frequency signal;
the phase shift module is configured to perform series-feed phase shifting between the intermediate frequency signal and a series-fed phase-shifted signal, where the phase shift module includes a plurality of first couplers and a plurality of phase shifters, each of the first couplers is serially connected to at least one of the phase shifters, each of the first couplers is configured to perform directional coupling between the intermediate frequency signal and the series-fed phase-shifted signal, and each of the phase shifters is configured to perform phase shifting between the intermediate frequency signal and the series-fed phase-shifted signal; and
a switch is disposed between the phase shift module and the frequency modulation module, where the switch includes a first end and a second end, the first end is configured to control a first frequency band of the dual-band phased array, and the second end is configured to control a second frequency band of the dual-band phased array.

The dual-band phased array further includes: an array antenna connected to the phase shift module, and the array antenna includes a first antenna and a second antenna; and

the first antenna is configured to radiate, when the first end of the switch is connected, a signal corresponding to the first frequency band, and the second antenna is configured to radiate, when the second end of the switch is connected, a signal corresponding to the second frequency band.

The dual-band phased array further includes:

a conversion module connected to the phase shift module and the array antenna, and a local oscillation module connected to the conversion module, where the local oscillation module is configured to provide local oscillation for the conversion module, so that the conversion module performs conversion between the series-fed phase-shifted signal and a converted signal.

The series-fed phase-shifted signal includes a first series-fed phase-shifted signal and a second series-fed phase-shifted signal, the converted signal includes a first converted signal, the first series-fed signal and the first converted signal are located on the first antenna, and the second series-fed signal is located on the second antenna;

the conversion module includes a first mixer; and the local oscillation module includes a first local oscillator, where the first local oscillator is configured to provide a first local oscillator amplitude and a first local oscillator frequency for the first mixer, so that the first mixer performs mixing between the first series-fed phase-shifted signal and the first converted signal.

When the intermediate frequency signal is converted into the first converted signal, the first end of the switch is connected, the phase shift module is configured to make the intermediate frequency signal sequentially pass through the first coupler and the phase shifter from a first end of the phase shift module, the first coupler directly couples some intermediate frequency signals to the first antenna, and the phase shifter shifts, to the first coupler by means of phase shifting, the remaining intermediate frequency signals that are not directly coupled to the first antenna by the first coupler, so that the remaining intermediate frequency signals are coupled to the first antenna by using the first coupler, to obtain the first series-fed phase-shifted signal, where the first series-fed phase-shifted signal is marked as $\alpha \cos[w_0 t + (n - 1)\phi]$, a is an amplitude of the frequency modulation module, $w_0$ is a frequency of the frequency modulation module, $\phi$ is a phase difference provided by the phase shifter, t is a time variable, and n is a quantity of branches of the first antenna; and

the conversion module is configured to mix the first series-fed phase-shifted signal by using the first mixer, to convert the first series-fed phase-shifted signal into the first converted signal, where the first converted signal is

marked as $\dfrac{a+b}{2}\cos[(w_0 + w_1)t + (n-1)\phi]$, b is the first local oscillator amplitude, and $w_1$ is the first local oscillator frequency.

When the intermediate frequency signal is converted into the second series-fed phase-shifted signal, the second end of the switch is connected, the phase shift module is configured to make the intermediate frequency signal sequentially pass through the first coupler and the phase shifter from a second end of the phase shift module, the first coupler directly couples some intermediate frequency signals to the second antenna, and the phase shifter shifts, to the first coupler by means of phase shifting, the remaining intermediate frequency signals that are not directly coupled to the second antenna by the first coupler, so that the remaining intermediate frequency signals are coupled to the second antenna by using the first coupler, to obtain the second series-fed phase-shifted signal, where the second series-fed phase-shifted signal is marked as $a \cos[w_0 t + (m - 1)\phi]$, and m is a quantity of branches of the second antenna.

In a development the local oscillation module further includes a second local oscillator;

the converted signal further includes a second converted signal, and the second converted signal is located on the second antenna; the conversion module further includes a second mixer; and the second local oscillator is configured to provide a second local oscillator amplitude and a second local oscillator frequency for the second mixer, so that the second mixer performs mixing between the second series-fed phase-shifted signal and the second converted signal.

According to another development, when the second series-fed phase-shifted signal is converted into the second converted signal, the second end of the switch is connected, and the conversion module is configured to mix the second series-fed phase-shifted signal by using the second mixer, to convert the second series-fed phase-shifted signal into the second converted signal, where the second converted signal is marked as

$\dfrac{a+c}{2}\cos[(w_0 + w_2)t + (m-1)\phi]$, c is the second local oscillator amplitude, and $w_2$ is the second local oscillator frequency.

According to a further development when the first converted signal is converted into the intermediate frequency signal, the first end of the switch is connected, and the conversion module is configured to mix the first converted signal by using the first mixer, to convert the first converted signal into the first series-fed phase-shifted signal, where the first series-fed phase-shifted signal is marked as $a \cos[w_0 t + (n - 1)\phi]$; and

the phase shift module is configured to couple the first series-fed phase-shifted signal to the phase shift module by using the first coupler, to obtain the intermediate frequency signal on the phase shift module.

With reference to the eighth possible implementation of the first aspect, in a ninth possible implementation,

when the second converted signal is converted into the second series-fed phase-shifted signal, the second end of the switch is connected, and the conversion module is configured to mix the second converted signal by using the second mixer, to convert the second converted signal into the second series-fed phase-shifted signal, where the second series-fed phase-shifted signal is marked as $a \cos[w_0 t + (m - 1)\phi]$.

With reference to the ninth possible implementation of the first aspect, in a tenth possible implementation,

when the second series-fed phase-shifted signal is converted into the intermediate frequency signal, the second end of the switch is connected, and the phase shift module is configured to couple the second series-fed phase-shifted signal to the phase shift module by using the first coupler, to obtain the intermediate frequency signal on the phase shift module.

In another development the dual-band phased array further includes: a load module connected to the local oscillation module, where

the load module is configured to absorb remaining energy after the local oscillation module provides local oscillation.

With reference to the second possible implementation of the first aspect, in a twelfth possible implementation, the conversion module further includes a second coupler connected to the local oscillation module, where

the second coupler is configured to ensure that the local oscillation module provides constant local oscillation for the conversion module.

With reference to any one of the first aspect or the first to the twelfth possible implementations of the first aspect, in a thirteenth possible implementation, the dual-band phased array further includes a control module connected to the phase shift module, where

the control module is configured to control a beam direction of the array antenna by adjusting the phase difference of the phase shifter.

According to the foregoing technical solutions, a frequency modulation module performs frequency modulation between a baseband signal and an intermediate frequency signal, and a phase shift module performs series-feed phase shifting between the intermediate frequency signal and a series-fed phase-shifted signal. The phase shift module includes a first coupler and a phase shifter. The first coupler and the phase shifter perform directional coupling and phase shifting between the intermediate frequency signal and the series-fed phase-shifted signal respectively. The first coupler and the phase shifter implement dual bands by means of series-feed phase shifting. The first coupler and the phase shifter are serially connected to share system resources, thereby effectively saving system resources.

## BRIEF DESCRIPTION OF DRAWINGS

FIG. 1 is a schematic structural diagram of a dual-band phased array in the prior art;
FIG. 2 is a schematic diagram of an embodiment of a dual-band phased array according to an embodiment of the present invention;
FIG. 3 is a schematic diagram of another embodiment of a dual-band phased array according to an embodiment of the present invention;
FIG. 4 is a schematic diagram of another embodiment of a dual-band phased array according to an embodiment of the present invention;
FIG. 5 is a schematic diagram of another embodiment of a dual-band phased array according to an embodiment of the present invention;
FIG. 6 is a schematic structural diagram of a dual-band phased array according to an embodiment of the present invention; and
FIG. 7 is another schematic structural diagram of a dual-band phased array according to an embodiment of the present invention.

## DESCRIPTION OF EMBODIMENTS

The present invention provides a dual-band phased array, to resolve a prior-art problem that two frequency bands in a dual-band phased array independently occupy resources, thereby effectively saving system resources.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

In the specification, claims, and accompanying drawings of the present invention, the terms "first", "second", "third", "fourth", and the like (if existed) are intended to distinguish between similar objects but do not necessarily indicate a specific order or sequence. It should be understood that the data termed in such a way are interchangeable in proper circumstances, so that the embodiments of the present invention described herein can be implemented in orders in addition to the order illustrated or described herein. Moreover, the terms "include", "contain", and any other variants mean to cover the non-exclusive inclusion, for example, a process, method, system, product, or device that includes a list of steps or units is not necessarily limited to those units, but may include other units not expressly listed or inherent to such a process, method, system, product, or device.

For ease of understanding of the embodiments of the present invention, some elements used in description of the embodiments of the present invention are first described herein.

Phase shifter:

A phase shifter is a component for controlling a change of a signal phase, and is widely applied to a radar system, a microwave communications system, a measurement system, and the like. Phase shifters may be classified into different types according to different definition methods. The phase shifters are classified into an analog phase shifter and a digital phase shifter according to control manners; are classified into a reflection phase shifter and a transmission phase shifter according to working modes; or are classified into a loaded-line phase shifter, a switch-line phase shifter, and a switch-network (a high-pass/low-pass filter) phase shifter according to circuit topologies; or the like.

Coupler:

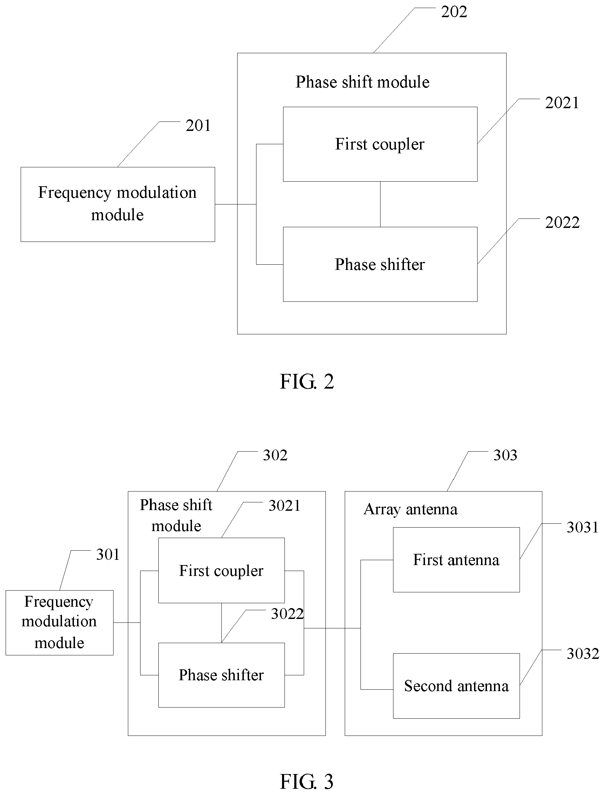

A coupler is a component for power distribution. Couplers may be classified into a directional coupler, a power divider, various microwave splitters, and the like. The directional coupler is a universal microwave/millimeter-wave component for signal isolation, separation, and mixing, such as power monitoring, source output power stabilization, signal source isolation, and transmission and reflection sweep tests. Main technical indicators of the directional coupler include directivity, a standing wave ratio, a coupling degree, and an insertion loss. The directional coupler uses various forms, such as a coaxial line, a strip line, a microstrip, a metallic waveguide, or a dielectric waveguide. A working principle of the directional coupler is that powers transmitted on a main line are coupled to a secondary line by various means and mutually interfered with, and are transmitted along only one direction on the secondary line. Referring to FIG. 2, an embodiment of a dual-band phased array in an embodiment of the present invention includes: a frequency modulation module 201, and a phase shift module 202 connected to the frequency modulation module 201.

The frequency modulation module 201 is configured to perform frequency modulation between a baseband signal and an intermediate frequency signal.

The baseband signal is an original electrical signal that is transmitted from a signal source and that undergoes no modulation (spectrum shifting and transformation), and has a relatively low frequency. The frequency modulation module may perform frequency modulation on the baseband signal to obtain an intermediate frequency signal. The intermediate frequency signal has a higher frequency than the baseband signal. Conversely, the frequency modulation module may also perform frequency modulation on an intermediate frequency signal to obtain a baseband signal.

The phase shift module 202 is configured to perform series-feed phase shifting between the intermediate frequency signal and a series-fed phase-shifted signal. The phase shift module 202 includes a first coupler 2021 and a phase shifter 2022. The first coupler 2021 is serially connected to the phase shifter 2022. The first coupler 2021 is configured to perform directional coupling between the intermediate frequency signal and the series-fed phase-shifted signal. The phase shifter 2022 is configured to perform phase shifting between the intermediate frequency signal and the series-fed phase-shifted signal.

For example, there may be multiple first couplers. Some of the first couplers directly perform directional coupling between the intermediate frequency signal and the series-fed phase-shifted signal. When these first couplers do not directly implement directional coupling between the intermediate frequency signal and the series-fed phase-shifted signal, the phase shifter further performs phase shifting between the intermediate frequency signal and the series-fed phase-shifted signal, to phase-shift the intermediate frequency signal to the other first couplers, until the other first couplers perform directional coupling between the intermediate frequency signal and the series-fed phase-shifted signal. Therefore, directional coupling functions of the first couplers are fully utilized, to implement directional coupling between the intermediate frequency signal and the series-fed phase-shifted signal. The series-fed phase-shifted signal is a signal obtained after the intermediate frequency signal has undergone series-feed phase shifting. That is, the series-fed phase-shifted signal is a signal obtained after the intermediate frequency signal is directionally coupled to an array antenna by using the first coupler. In the present invention, the first coupler and the phase shifter are serially connected to share system resources, thereby effectively saving system resources.

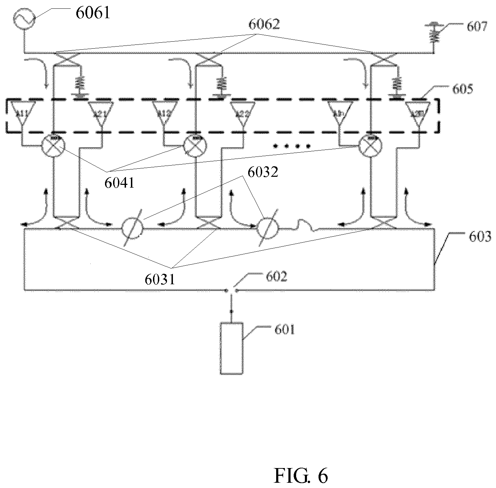

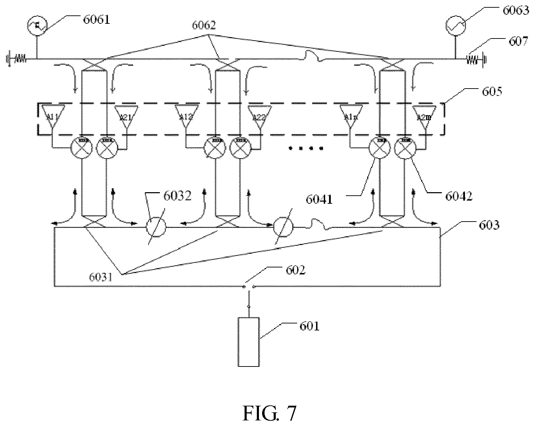

A switch (such as a switch 602 shown in FIG. 6 or FIG. 7) is disposed between the phase shift module 202 and the frequency modulation module 201. The switch includes a first end and a second end, where the first end is configured to control a first frequency band of the dual-band phased array, and the second end is configured to control a second frequency band of the dual-band phased array.

The dual-band phased array can implement two frequency bands. Specifically, the switch controls the frequency bands, and the switch includes the first end and the second end. When the first end is connected, the first end is configured to control the first frequency band of the dual-band phased array; or when the second end is connected, the second end is configured to control the second frequency band of the dual-band phased array.

In this embodiment of the present invention, a frequency modulation module performs frequency modulation between a baseband signal and an intermediate frequency signal, and a phase shift module performs series-feed phase shifting between the intermediate frequency signal and a series-fed phase-shifted signal. The phase shift module includes a first coupler and a phase shifter. The first coupler and the phase shifter are configured to perform directional coupling and phase shifting between the intermediate frequency signal and the series-fed phase-shifted signal respectively. The first coupler and the phase shifter implement dual bands by means of series-feed phase shifting. The first coupler and the phase shifter are serially connected to share system resources, thereby effectively saving system resources.

Based on the embodiment shown in FIG. 2 and referring to FIG. 3, a dual-band phased array in an embodiment of the present invention includes:

a frequency modulation module 301, a phase shift module 302 connected to the frequency modulation module 301, and an array antenna 303 connected to the phase shift module 302.

The frequency modulation module 301 and the phase shift module 302 are similar to the frequency modulation module 201 and the phase shift module 202 in the embodiment shown in FIG. 2. For details, refer to the embodiment shown in FIG. 2, and details are not described herein again.

The phase shift module 302 includes a first coupler 3021 and a phase shifter 3022.

The array antenna 303 includes a first antenna 3031 and a second antenna 3032.

The first antenna 3031 is configured to radiate, when a first end of the switch is connected, a signal corresponding to the first frequency band. The second antenna 3032 is configured to radiate, when a second end of the switch is connected, a signal corresponding to the second frequency band.

For example, when a signal is transmitted from the phase shift module to the array antenna, and the first end of the switch is connected, an intermediate frequency signal is shifted to the first antenna by means of series-feed phase shifting by fully utilizing a directional coupling function of the first coupler and a phase-shifting function of the phase shifter, to obtain a series-fed phase-shifted signal. The first antenna radiates the series-fed phase-shifted signal on the first antenna, to implement a first frequency band. When a signal is transmitted from the phase shift module to the array antenna, and the second end of the switch is connected, a series-fed phase-shifted signal is obtained on the second antenna. The second antenna radiates the series-fed phase-shifted signal on the second antenna, to implement a second frequency band.

It should be noted that, when the series-fed phase-shifted signal on the first antenna or the series-fed phase-shifted signal on the second antenna is converted, the corresponding antenna radiates a converted signal.

In this embodiment of the present invention, a directional coupling function of a first coupler and a phase shifting function of a phase shifter are fully utilized, and two frequency bands of a phased array are controlled by using two ends of a switch. The first coupler and the phase shifter are serially connected to share system resources, thereby effectively saving system resources.

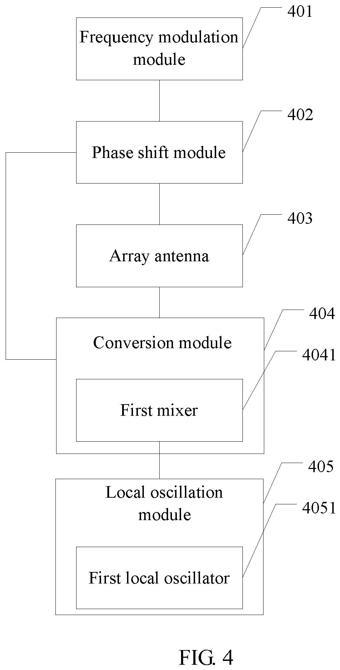

Based on the embodiment shown in FIG. 3 and referring to FIG. 4, another embodiment of a dual-band phased array in an embodiment of the present invention includes:

a frequency modulation module 401, a phase shift module 402 connected to the frequency modulation module 401, an array antenna 403 connected to the phase shift module 402, a conversion module 404 connected to the phase shift module 402 and the array antenna 403, and a local oscillation module 405 connected to the conversion module 404.

The frequency modulation module 401 and the phase shift module 402 are similar to the frequency modulation module 201 and the phase shift module 202 in the embodiment shown in FIG. 2. For details, refer to the embodiment shown in FIG. 2, and details are not described herein again.

The array antenna 403 is similar to the array antenna 303 in the embodiment shown in FIG. 3. For details, refer to the embodiment shown in FIG. 3, and details are not described herein again. The local oscillation module 405 is configured to provide local oscillation for the conversion module 404, so that the conversion module 404 performs conversion between the series-fed phase-shifted signal and a converted signal.

It may be understood that the local oscillation module provides local oscillation for the conversion module, so that the conversion module performs conversion more effectively. The local oscillation is specifically a local oscillator amplitude, a local oscillator frequency, a local oscillator phase, or the like, and is not specifically limited herein.

Preferably, the series-fed phase-shifted signal includes a first series-fed phase-shifted signal and a second series-fed phase-shifted signal. The converted signal includes a first converted signal. The first series-fed signal and the first converted signal are located on the first antenna, and the second series-fed signal is located on the second antenna.

The conversion module 404 includes a first mixer 4041.

The local oscillation module 405 includes a first local oscillator 4051. The first local oscillator 4051 is configured to provide a first local oscillator amplitude and a first local oscillator frequency for the first mixer 4041, so that the first mixer 4041 performs mixing between the first series-fed phase-shifted signal and the first converted signal.

When the intermediate frequency signal is pre-converted into the first converted signal, a first end of the switch is connected, the phase shift module 402 is configured to make the intermediate frequency signal sequentially pass through the first coupler and the phase shifter from a first end of the phase shift module 402, the first coupler directly couples some intermediate frequency signals to the first antenna, and the phase shifter shifts, to the first coupler by means of phase shifting, the remaining intermediate frequency signals that are not directly coupled to the first antenna by the first coupler, so that the remaining intermediate frequency signals are coupled to the first antenna by using the first coupler, to obtain the first series-fed phase-shifted signal. The first series-fed phase-shifted signal is marked as $a \cos[w_0 t + (n - 1)\phi]$, where a is an amplitude of the frequency modulation module, $w_0$ is a frequency of the frequency modulation module, $\phi$ is a phase difference provided by the phase shifter, t is a time variable, and n is a quantity of branches of the first antenna.

The conversion module 404 is configured to mix the first series-fed phase-shifted signal by using the first mixer 4041, to convert the first series-fed phase-shifted signal into the first converted signal. The first converted signal is marked as

$$\frac{a+b}{2}\cos[(w_0 + w_1)t + (n-1)\phi],$$ where b is the first local oscillator amplitude, and $w_1$ is the first local oscillator frequency.

When the intermediate frequency signal is pre-converted into the second series-fed phase-shifted signal, a second end of the switch is connected, the phase shift module 402 is configured to make the intermediate frequency signal sequentially pass through the first coupler and the phase shifter from a second end of the phase shift module, the first coupler directly couples some intermediate frequency signals to the second antenna, and the phase shifter shifts, to the first coupler by means of phase shifting, the remaining intermediate frequency signals that are not directly coupled to the second antenna by the first coupler, so that the remaining intermediate frequency signals are coupled to the second antenna by using the first coupler, to obtain the second series-fed phase-shifted signal. The second series-fed phase-shifted signal is marked as $a \cos[w_0 t + (m - 1)\phi]$, where m is a quantity of branches of the second antenna.

It may be understood that, in this embodiment, conversion occurs as the first mixer is disposed on a branch of the first antenna, and conversion is not required as no mixer is disposed on a branch of the second antenna.

Further, when the first converted signal is pre-converted into the intermediate frequency signal, the first end of the switch is connected, and the conversion module is configured to mix the first converted signal by using the first mixer, to convert the first converted signal into the first series-fed phase-shifted signal. The first series-fed phase-shifted signal is marked as $a \cos[w_0 t + (n - 1)\phi]$.

The phase shift module is configured to couple the first series-fed phase-shifted signal to the phase shift module by using the first coupler, to obtain the intermediate frequency signal on the phase shift module.

When the second series-fed phase-shifted signal is pre-converted into the intermediate frequency signal, the second end of the switch is connected, and the phase shift module is configured to couple the second series-fed phase-shifted signal to the phase shift module by using the first coupler, to obtain the intermediate frequency signal on the phase shift module.

In this embodiment of the present invention, processes in which a signal is transmitted from a frequency modulation module to an array antenna and the signal is transmitted from the array antenna to a conversion module are separately described. On a first antenna, the conversion module performs conversion between a first series-fed phase-shifted signal and a first converted signal, and a first local oscillator provides corresponding local oscillation. A first coupler and a phase shifter in a phase shift module implement dual bands by means of series-feed phase shifting. The first coupler and the phase shifter are serially connected to share system resources, thereby effectively saving system resources.

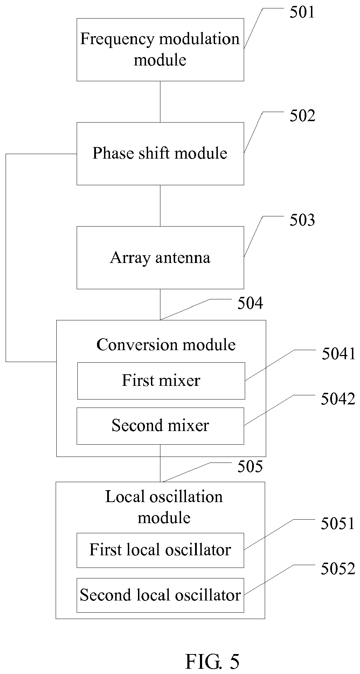

Based on the embodiment shown in FIG. 4 and referring to FIG. 5, another embodiment of a dual-band phased array in an embodiment of the present invention includes:

a frequency modulation module 501, a phase shift module 502 connected to the frequency modulation module 501, an array antenna 503 connected to the phase shift module 502, a conversion module 504 connected to the phase shift module 502 and the array antenna 503, and a local oscillation module 505 connected to the conversion module 504.

In some optional embodiments, the dual-band phased array further includes a load module connected to the local oscillation module, where the load module is configured to absorb remaining energy after the local oscillation module provides local oscillation.

In some optional embodiments, the conversion module further includes a second coupler connected to the local oscillation module.

The second coupler is configured to ensure that the local oscillation module provides constant local oscillation for the conversion module. It may be learnt that the second coupler assists the local oscillation module, so that the local oscillation module provides constant local oscillation, that is, provides a constant local oscillator frequency and a constant local oscillation phase. In addition, the local oscillation phase requires an equal phase relationship or a determined phase relationship, so that a beam is well controlled by using the phase shifter.

Preferably, the series-fed phase-shifted signal includes a first series-fed phase-shifted signal and a second series-fed phase-shifted signal. The converted signal includes a first converted signal. The first series-fed signal and the first converted signal are located on the first antenna, and the second series-fed signal is located on the second antenna.

The conversion module 504 includes a first mixer 5041.

The local oscillation module 505 includes a first local oscillator 5051. The first local oscillator 5051 is configured to provide a first local oscillator amplitude and a first local oscillator frequency for the first mixer 5041, so that the first mixer 5041 performs mixing between the first series-fed phase-shifted signal and the first converted signal.

When the intermediate frequency signal is pre-converted into the first converted signal, a first end of a switch is connected, the phase shift module 502 is configured to make the intermediate frequency signal sequentially pass through the first coupler and the phase shifter from a first end of the phase shift module 502, the first coupler directly couples some intermediate frequency signals to the first antenna, and the phase shifter shifts, to the first coupler by means of phase shifting, the remaining intermediate frequency signals that are not directly coupled to the first antenna by the first coupler, so that the remaining intermediate frequency signals are coupled to the first antenna by using the first coupler, to obtain the first series-fed phase-shifted signal. The first series-fed phase-shifted signal is marked as $a \cos[w_0 t + (n - 1)\phi]$, where a is an amplitude of the frequency modulation module, $w_0$ is a frequency of the frequency modulation module, $\phi$ is a phase difference provided by the phase shifter, t is a time variable, and n is a quantity of branches of the first antenna.

The conversion module 504 is configured to mix the first series-fed phase-shifted signal by using the first mixer 5041, to convert the first series-fed phase-shifted signal into the first converted signal. The first converted signal is marked as $\frac{a+b}{2}\cos[(w_0 + w_1)t + (n-1)\phi]$, where b is the first local oscillator amplitude, and $w_1$ is the first local oscillator frequency. The local oscillation module 505 further includes a second local oscillator 5052.

The converted signal further includes a second converted signal, and the second converted signal is located on the second antenna.

The conversion module 504 further includes a second mixer 5042.

The second local oscillator 5052 is configured to provide a second local oscillator amplitude and a second local oscillator frequency for the second mixer 5042, so that the second mixer 5042 performs mixing between the second series-fed phase-shifted signal and the second converted signal.

When the intermediate frequency signal is pre-converted into the second series-fed phase-shifted signal, a second end of the switch is connected, the phase shift module is configured to make the intermediate frequency signal sequentially pass through the first coupler and the phase shifter from a second end of the phase shift module, the first coupler directly couples some intermediate frequency signals to the second antenna, and the phase shifter shifts, to the first coupler by means of phase shifting, the remaining intermediate frequency signals that are not directly coupled to the second antenna by the first coupler, so that the remaining intermediate frequency signals are coupled to the second antenna by using the first coupler, to obtain the second series-fed phase-shifted signal. The second series-fed phase-shifted signal is marked as $a \cos[w_0 t + (m - 1)\phi]$, where m is a quantity of branches of the second antenna.

When the second series-fed phase-shifted signal is pre-converted into the second converted signal, the second end of the switch is connected, and the conversion module 504 is configured to mix the second series-fed phase-shifted signal by using the second mixer, to convert the second series-fed phase-shifted signal into the second converted signal. The second converted signal is marked as $\frac{a+c}{2}\cos[(w_0 + w_2)t + (m-1)\phi]$, where c is the second local oscillator amplitude, and $w_2$ is the second local oscillator frequency.

Further, when the first converted signal is pre-converted into the intermediate frequency signal, the first end of the switch is connected, and the conversion module 504 is configured to mix the first converted signal by using the first mixer, to convert the first converted signal into the first series-fed phase-shifted signal. The first series-fed phase-shifted signal is marked as $a \cos[w_0 t + (n - 1)\phi]$.

The phase shift module is configured to couple the first series-fed phase-shifted signal to the phase shift module by using the first coupler, to obtain the intermediate frequency signal on the phase shift module.

Further, when the second converted signal is pre-converted into the second series-fed phase-shifted signal, the second end of the switch is connected, and the conversion module 504 is configured to mix the second converted signal by using the second mixer, to convert the second converted signal into the second series-fed phase-shifted signal. The second series-fed phase-shifted signal is marked as $a \cos[w_0 t + (m - 1)\phi]$.

When the second series-fed phase-shifted signal is pre-converted into the intermediate frequency signal, the second end of the switch is connected, and the phase shift module is configured to couple the second series-fed phase-shifted signal to the phase shift module by using the first coupler, to obtain the intermediate frequency signal on the phase shift module.

In some optional embodiments, the dual-band phased array further includes a control module connected to the phase shift module.

The control module is configured to control a beam direction of the array antenna by adjusting the phase difference of the phase shifter.

In this embodiment of the present invention, processes in which a signal is transmitted from a frequency modulation module to an array antenna and the signal is transmitted from the array antenna to a conversion module are separately described. On a first antenna, the conversion module performs conversion between a first series-fed phase-shifted signal and a first converted signal, and a first local oscillator provides corresponding local oscillation. On a second antenna, the conversion module performs conversion between a second series-fed phase-shifted signal and a second converted signal, and a second local oscillator provides corresponding local oscillation. A first coupler and a phase shifter in a phase shift module implement dual bands by means of series-feed phase shifting. The first coupler and the phase shifter are serially connected to share system resources, thereby effectively saving system resources.

Based on the foregoing embodiments and referring to FIG. 6 and FIG. 7, an embodiment of an application scenario of a dual-band phased array in an embodiment of the present invention includes the following.

Referring to FIG. 6, in an example in which a first frequency band works, when a transmit link works, that is, a signal is transmitted from a frequency modulation module 601 to an array antenna 605, first, the frequency modulation module 601 modulates a baseband signal to a phase shift module 603, to obtain an intermediate frequency signal. A switch 602 may be a single-pole double-throw switch, including a first end and a second end. The first end may be considered as the left side, and the second end may be considered as the right side. When the switch 602 is switched to the left side, the intermediate frequency signal sequentially goes through a first coupler 6031 and a phase shifter 6032 from left to right, and then reaches the array antenna 605, and specifically, reaches a branch at which a first antenna A1 is located, to obtain a first series-fed phase-shifted signal, where A represents the array antenna. The first series-fed phase-shifted signal is mixed at a first mixer 6041 at each branch, to obtain a first converted signal. A signal of a first local oscillation module 6061 sequentially goes through a second coupler 6062 at each level from left to right, and reaches the first mixer 6041 at each level to provide local oscillation. A load module 607 is configured to absorb remaining energy after the first local oscillator module 6061 provides local oscillation. A first series-fed phase-shifted signal on an antenna A11 is marked as $a \cos w_0 t$, a first mixer signal on the antenna A11 is $b \cos w_1 t$, and a first converted signal obtained by means of mixing is marked as $\frac{a+b}{2}\cos(w_0 + w_1)t$. A first series-fed phase-shifted signal on an antenna A12 is $a \cos(w_0 t + \phi)$, and a first converted signal obtained by means of mixing performed by the first mixer is marked as $\frac{a+b}{2}\cos[(w_0 + w_1)t + \phi]$. Similarly, on an antenna A1n, a first converted signal obtained by means of mixing is marked as $\frac{a+b}{2}\cos[(w_0 + w_1)t + (n-1)\phi]$. When the switch is switched to the left side, the dual-band phased array works at a frequency of $w_0 + w_1$, and a phase difference $\phi$ generated by the phase shifter 6032 still exists between neighboring branches of the first antenna. Therefore, an antenna beam direction can be adjusted by adjusting a phase-shifting value of the phase shifter 6032. It should be noted that, regardless of the first coupler 6031 at each branch in the phase shift module 603 or the second coupler 6062 at each branch in the local oscillation module 6042, it should be ensured that energy of signals coupled to the branches should be consistent, that is, amplitudes at the branches are consistent. In addition, a phase at each local oscillation branch requires an equal phase relationship or a determined phase relationship, so that a beam is well controlled by using the phase shifter 6032. When a receive link works, that is, a signal is transmitted from the array antenna 605 to the frequency modulation module 601, a principle of the receive link is the same as that of the transmit link, except for a reverse signal direction. When the left side of the switch 602 is connected, the array antenna 605 receives the first converted signal, and the first mixer 6041 at each level mixes the first converted signal, and converts the first converted signal into a first series-fed phase-shifted signal, where the first series-fed phase-shifted signal is marked as $a \cos[w_0 t + (n-1)\phi]$. The phase shift module 603 is configured to couple the first series-fed phase-shifted signal to the phase shift module 603 by using the first coupler 6031, to obtain an intermediate frequency signal on the phase shift module 603. Then, the frequency modulation module 601 performs frequency modulation on the intermediate frequency signal to obtain a baseband signal.

In an example in which a second frequency band works, when a transmit link works, that is, a signal is transmitted from the frequency modulation module 601 to the array antenna 605, first, the frequency modulation module 601 modulates a baseband signal to the phase shift module 603, to obtain an intermediate frequency signal. When the right side of the switch 602 is connected, the intermediate frequency signal sequentially goes through the first coupler 6031 and the phase shifter 6032 at each level from right to left, and reaches the array antenna 605, and specifically, a branch at which an antenna A2 is located, to obtain a second series-fed phase-shifted signal. The first coupler couples the intermediate frequency signal with given energy to a branch at which an antenna A2m is located, and an obtained second series-fed phase-shifted signal is marked as $a \cos w_0 t$. The

phase shifter shifts, by means of phase shifting, an intermediate frequency signal that is not coupled to the antenna A2m, and the intermediate frequency signal undergoes coupling and phase shifting at each level from right to left. A second series-fed phase-shifted signal reaching an antenna A22 is $a \cos[w_0 t + (m - 2)\phi]$, and a second series-fed phase-shifted signal reaching an antenna A21 is $a \cos[w_0 t + (m - 1)\phi]$. A fixed phase difference $\phi$ exists between neighboring antennas, that is, a phase-shifting value provided for each phase shifter. A specific beam direction is formed after the second series-fed phase-shifted signal is radiated by an antenna at each level. The antenna beam direction is adjusted by adjusting the phase-shifting value $\phi$ of the phase shifter at each level. Subsequently, a second antenna radiates the second series-fed phase-shifted signal.

When the receive link works, and the right side of the switch 602 is connected, the second antenna receives the second series-fed phase-shifted signal. The phase shift module 603 couples the second series-fed phase-shifted signal on the second antenna to the phase shift module 603 by using the first coupler 6031, to obtain an intermediate frequency signal on the phase shift module 603. Then, the frequency modulation module 601 performs frequency modulation on the intermediate frequency signal to obtain a baseband signal.

Based on FIG. 6, refer to FIG. 7. Different from the structure shown in FIG. 6, a structure shown in FIG. 7 includes two local oscillators: a first local oscillator 6061 and a second local oscillator 6063, and includes two types of mixers: a first mixer 6041 and a second mixer 6042. The first local oscillator 6061 provides local oscillation for all first mixers 6041 at branches of a first antenna A1, and the second local oscillator 6063 provides local oscillation for all second mixers 6042 at branches of a second antenna A2. A load module 607 is configured to absorb remaining energy after the first local oscillator 6041 and the second local oscillator 6042 provide the local oscillation. The two local oscillators work at different working frequencies $w_1$ and $w_2$ respectively. A first converted signal with a frequency $w_0 + w_1$ and a second converted signal with a frequency $w_0 + w_2$ that are obtained through separate mixing with a series-fed phase-shifted signal working at $w_0$ are radiated by the antenna A1 and the antenna A2 respectively. Because the series-fed phase-shifted signal with the frequency $w_0$ has undergone phase control, the first converted signal and the second converted signal obtained by means of mixing have also undergone phase control. Therefore, a specific antenna beam direction can be obtained after the first converted signal and the second converted signal are radiated by the array antennas A1 and A2. In addition, the antenna beam direction can be controlled as required by adjusting a phase-shifting value of the phase shifter 6032. Similarly, when local oscillation signals provided by the first local oscillator 6061 and the second local oscillator 6063 reach each first mixer 6041 and each second mixer 6042 through the second coupler 6062, it should be ensured that the signals are equi-amplitude and in-phase, or are equi-amplitude and have a determined phase relationship.

In an example in which a first frequency band works, when a transmit link works, first, a local oscillation signal provided by the first local oscillator 6061 sequentially goes through each second coupler 6062 from left to right, and reaches each first mixer 6041 of an antenna A1, to provide local oscillation. The local oscillation provided by the first local oscillator 6061 is equi-amplitude and in-phase, or is equi-amplitude and has a determined phase relationship. When the left side of the switch is connected, an intermediate frequency signal sequentially goes through the first coupler 6031 and the phase shifter 6032 from left to right, and reaches the antenna A1, to obtain a first series-fed phase-shifted signal. The first series-fed phase-shifted signal obtained at an antenna A11 is $a \cos w_0 t$, a first series-fed phase-shifted signal on an antenna A12 is $a \cos(w_0 t + \phi)$, and a first series-fed phase-shifted signal reaching an antenna A1n is $a \cos[w_0 t + (n - 1)\phi]$. The first series-fed phase-shifted signals are respectively mixed at the first mixers 6041 to obtain first converted signals. A first converted signal on the antenna A11 is $\dfrac{a+b}{2}\cos(w_0 + w_1)t$, a first converted signal on the antenna A12 is $\dfrac{a+b}{2}\cos[(w_0 + w_1)t + \phi]$, and a first converted signal on the antenna A1n is $\dfrac{a+b}{2}\cos[(w_0 + w_1)t + (n-1)\phi]$. In this case, the phased array works at a frequency $\omega_0 + \omega_1$, a fixed phase difference $\phi$ exists between neighboring branches of the first antenna, and an antenna beam direction is controlled by controlling the phase-shifting value $\phi$ of the phase shifter 6032.

When a receive link works, and the left side of the switch 602 is connected, the array antenna 605 receives the first converted signal, and the first mixer 6041 at each level mixes the first converted signal, and converts the first converted signal into a first series-fed phase-shifted signal, where the first series-fed phase-shifted signal is marked as $a \cos[w_0 t + (n - 1)\phi]$. The phase shift module 603 is configured to couple the first series-fed phase-shifted signal to the phase shift module 603 by using the first coupler 6031, to obtain an intermediate frequency signal on the phase shift module 603. Then, the frequency modulation module 601 performs frequency modulation on the intermediate frequency signal to obtain a baseband signal.

In an example in which a second frequency band works, when a transmit link works, first, a local oscillation signal provided by the second local oscillator 6063 sequentially goes through each second coupler 6062 from left to right, and reaches each second mixer 6042 of an antenna A2, to provide local oscillation. When the right side of the switch is connected, an intermediate frequency signal sequentially goes through the first coupler 6031 and the phase shifter 6032 from left to right, and reaches the antenna A2, to obtain a second series-fed phase-shifted signal. A second series-fed phase-shifted signal reaching an antenna A21 is $a \cos w_0 t$, a first mixer signal on the antenna A21 is $c \cos w_2 t$, and a second converted signal obtained by means of mixing is

marked as $\dfrac{a+c}{2}\cos(w_0 + w_2)t$ . A second series-fed phase-shifted signal on an antenna A22 is $a \cos(w_0 t + \phi)$, and a second converted signal obtained by means of mixing performed by the second mixer 6042 is marked

as $\dfrac{a+c}{2}\cos[(w_0 + w_2)t + \phi]$ . Similarly, a second series-fed phase-shifted signal on an antenna A2m is marked as $a \cos[w_2 t + (m - 1)\phi]$, and a second converted signal obtained by means of mixing performed by the second mixer 6042 is

$\dfrac{a+c}{2}\cos[(w_0 + w_2)t + (m-1)\phi]$ . In this case, the phased array works at a frequency $\omega_0 + \omega_2$. In addition, a fixed phase difference $\phi$ also exists between neighboring branches of the second antenna, and an antenna beam direction is controlled by controlling the phase-shifting value $\phi$ of the phase shifter 6032.

When a receive link works, that is, a signal is transmitted from the array antenna 605 to the frequency modulation module 601, a principle of the receive link is the same as that of the transmit link, except for a reverse signal direction. When the right side of the switch 602 is connected, the array antenna 605 receives the second converted signal, the second mixer 6042 at each level mixes the second converted signal, and converts the second converted signal into a second series-fed phase-shifted signal, where the second series-fed phase-shifted signal is marked as $a \cos[w_0 t + (m - 1)\phi]$. The phase shift module 603 is configured to couple the second series-fed phase-shifted signal to the phase shift module 603 by using the first coupler 6031, to obtain an intermediate frequency signal on the phase shift module 603. Then, the frequency modulation module 601 performs frequency modulation on the intermediate frequency signal to obtain a baseband signal.

In conclusion, a frequency modulation module performs frequency modulation between a baseband signal and an intermediate frequency signal, and a phase shift module performs series-feed phase shifting between the intermediate frequency signal and a series-fed phase-shifted signal. The phase shift module includes a first coupler and a phase shifter. The first coupler and the phase shifter perform directional coupling and phase shifting between the intermediate frequency signal and the series-fed phase-shifted signal respectively. The first coupler and the phase shifter implement dual bands by means of series-feed phase shifting. The first coupler and the phase shifter are serially connected to share system resources, thereby effectively saving system resources.

In the foregoing embodiments, the description of each embodiment has respective focuses. For a part that is not described in detail in an embodiment, refer to related descriptions in other embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections between some interfaces, apparatuses, and units, or may be implemented in electronic, mechanical, or other forms.

The units described as separate parts may or may not be physically separate. Parts displayed as units may or may not be physical units, and may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A dual-band phased array, comprising:

   a frequency modulation module (201, 301 401, 501, 601) which is configured to perform frequency modulation between a baseband signal and an intermediate frequency signal,
   a phase shift module (202, 302 402, 502, 603) connected to the frequency modulation module (201, 301 401, 501, 601), wherein the phase shift module (202, 302, 402, 502, 603) comprises a first coupler (2021, 3021, 6031) and
   a phase shifter (2022, 3022, 6032), the phase shift module being configured to perform series-feed phase shifting between the intermediate frequency signal and a series-fed phase-shifted signal, the first coupler is serially connected to the phase shifter, the first coupler is configured to perform directional coupling between the intermediate frequency signal and the series-fed phase-shifted signal, and the phase shifter is configured to perform phase shifting between the intermediate frequency signal and the series-fed phase-shifted signal,
   an array antenna (303, 403, 503, 605) connected to the phase shift module (202, 302 402, 502, 603), wherein the array antenna (303, 403, 503, 605) comprises a first antenna (3031, 4031) and a second antenna (3032, 4032),
   a conversion module (404, 504, 604) connected to the phase shift module (202, 302, 402, 502, 603) and the array antenna (303, 403, 503, 605), wherein the conversion module (404, 504, 604) comprises a first mixer (4041, 5041, 6041),
   a local oscillation module (405, 505, 606) connected to the conversion module (404, 504, 604), wherein the local oscillation module (405, 505, 606) comprises a first local oscillator (4051, 5051, 6061), and
   a switch (602) which is disposed between the phase shift module (202, 302, 402, 502, 603) and the frequency modulation module (201, 301 401, 501, 601), wherein the switch (602) comprises a first end and a second end, the first end is configured to control a first frequency band of the dual-band phased array, and the second end is configured to control a second frequency band of the dual-band phased array;

   wherein the first antenna is configured to radiate, when the first end of the switch is connected, a signal corresponding to the first frequency band, and the second antenna is configured to radiate, when the second end of the switch is connected, a signal corresponding to the second frequency band,
   wherein the local oscillation module is configured to provide local oscillation for the conversion module, so that the conversion module performs conversion between the series-fed phase-shifted signal and a converted signal,
   wherein the series-fed phase-shifted signal comprises a first series-fed phase-shifted signal and a second series-fed phase-shifted signal, the converted signal comprises a first converted signal, the first series-fed phase-shifted signal and the first converted signal are located on the first antenna, and the second series-fed phase-shifted signal is located on the second antenna,
   wherein the first local oscillator is configured to provide a first local oscillator amplitude and a first local oscillator frequency for the first mixer, so that the first mixer performs mixing between the first series-fed phase-shifted signal and the first converted signal,
   the dual-band phased array being **characterized in that**
   when the intermediate frequency signal is converted into the first converted signal, the first end of the switch (602) is connected, the phase shift module (202, 302, 402, 502, 603) is configured to make the intermediate frequency signal sequentially pass through the first coupler (2021, 3021, 6031) and the phase shifter (2022, 3022, 6032) from a first end of the phase shift module, the first coupler (2021, 3021, 6031) directly couples some intermediate frequency signals to the first antenna (3031,4031), and the phase shifter (2022, 3022, 6032) shifts, to the first coupler (2021, 3021, 6031) by means of phase shifting, the remaining intermediate frequency signals that are not directly coupled to the first antenna (3031, 4031) by the first coupler, so that the remaining intermediate frequency signals are coupled to the first antenna (3031, 4031) by using the first coupler, to obtain the first series-fed phase-shifted signal, wherein the first series-fed phase-shifted signal is marked as $a\cos[w_0 t + (n-1)\phi]$, a is an amplitude of the frequency modulation module (201, 301, 401, 501, 601), $w_0$ is a frequency of the frequency modulation module (201, 301, 401, 501, 601), $\phi$ is a phase difference provided by the phase shifter (2022, 3022, 6032), t is a time variable, and n is a quantity of branches of the first antenna (3031, 4031);
   the first local oscillator (4051, 5051, 6061) is configured to provide a first local oscillator amplitude and a first local oscillator frequency for the first mixer (4041, 5041, 6041); and
the conversion module (404, 504, 604) is configured to mix the first series-fed phase-shifted signal by using the first mixer (4041, 5041, 6041), to convert the first series-fed phase-shifted signal into the first converted signal, wherein the first converted signal is marked as

$$\frac{a+b}{2}\cos[(w_0 + w_1)t + (n-1)\phi],$$ b is

the first local oscillator amplitude, and $w_1$ is the first local oscillator frequency; and,
when the intermediate frequency signal is converted into the second series-fed phase-shifted signal, the second end of the switch (602) is connected, the phase shift module (202, 302, 402, 502, 603) is configured to make the intermediate frequency signal sequentially pass through the first coupler (2021, 3021, 6031) and the phase shifter (2022, 3022, 6032) from a second end of the phase shift module (202, 302, 402, 502, 603), the first coupler (2021, 3021, 6031) directly couples some intermediate frequency signals to the second antenna (3032, 4032), and the phase shifter (2022, 3022, 6032) shifts, to the first coupler (2021, 3021, 6031) by means of phase shifting, the remaining intermediate frequency signals that are not directly coupled to the second antenna (3032, 4032) by the first coupler, so that the remaining intermediate frequency signals are coupled to the second antenna (3032, 4032) by using the first coupler, to obtain the second series-fed phase-shifted signal, wherein the second series-fed phase-shifted signal is marked as $a \cos[w_0 t + (m - 1)\phi]$, and m is a quantity of branches of the second antenna (3032, 4032).

2. The dual-band phased array according to claim 1, wherein
the local oscillation module (405, 505, 606) further comprises a second local oscillator;
the converted signal further comprises a second converted signal, and the second converted signal is located on the second antenna (3032, 4032);
the conversion module (404, 504,604) further comprises a second mixer (5042, 6042); and
the second local oscillator is configured to provide a second local oscillator amplitude and a second local oscillator frequency for the second mixer (5042, 6042), so that the second mixer (5042, 6042) performs mixing between the second series-fed phase-shifted signal and the second converted signal.

3. The dual-band phased array according to claim 2, wherein

when the second series-fed phase-shifted signal is converted into the second converted signal, the second end of the switch (602) is connected, and the conversion module (404, 504, 604) is configured to mix the second series-fed phase-shifted signal by using the second mixer (5042, 6042), to convert the second series-fed phase-shifted signal into the second converted signal, wherein the second converted signal is marked as

$$\frac{a+c}{2}\cos[(w_0 + w_2)t + (m-1)\phi],$$ c is the

second local oscillator amplitude, and $w_2$ is the second local oscillator frequency.

4. The dual-band phased array according to claim 1, wherein
when the first converted signal is converted into the intermediate frequency signal, the first end of the switch (602) is connected, and the conversion module (404, 504, 604) is configured to mix the first converted signal by using the first mixer (4041, 5041, 6041), to convert the first converted signal into the first series-fed phase-shifted signal, wherein the first series-fed phase-shifted signal is marked as $a \cos[w_0 t + (n - 1)\phi]$; and
the phase shift module (202, 302, 402, 502, 603) is configured to couple the first series-fed phase-shifted signal to the phase shift module (202, 302, 402, 502, 603) by using the first coupler, to obtain the intermediate frequency signal on the phase shift module (202, 302, 402, 502, 603).

5. The dual-band phased array according to claim 4, wherein
when the second converted signal is converted into the second series-fed phase-shifted signal, the second end of the switch (602) is connected, and the conversion module (404, 504, 604) is configured to mix the second converted signal by using the second mixer (5042, 6042), to convert the second converted signal into the second series-fed phase-shifted signal, wherein the second series-fed phase-shifted signal is marked as $a \cos[w_0 t + (m - 1)\phi]$.

6. The dual-band phased array according to claim 5, wherein
when the second series-fed phase-shifted signal is converted into the intermediate frequency signal, the second end of the switch (602) is connected, and the phase shift module (202, 302, 402, 502, 603) is configured to couple the second series-fed phase-shifted signal to the phase shift module (202, 302, 402, 502, 603) by using the first coupler, to obtain the intermediate frequency signal on the phase shift module (202, 302, 402, 502, 603).

7. The dual-band phased array according to claim 1, wherein the dual-band phased array further comprises: a load module connected to the local oscillation module (405, 505, 606), wherein

the load module is configured to absorb remaining energy after the local oscillation module (405, 505, 606) provides local oscillation.

8. The dual-band phased array according to claim 1, wherein the conversion module (404, 504, 604) further comprises: a second coupler (6062) connected to the local oscillation module (405, 505, 606), wherein

the second coupler is configured to ensure that the local oscillation module (405, 505, 606) provides constant local oscillation for the conversion module (404, 504, 604).

9. The dual-band phased array according to any one of claims 1 to 8, wherein the dual-band phased array further comprises: a control module connected to the phase shift module (202, 302, 402, 502, 603), wherein

the control module is configured to control a beam direction of the array antenna (303, 403, 503, 605) by adjusting the phase difference of the phase shifter (2022, 3022, 6032).

**Patentansprüche**

1. Phasengesteuertes Dualbandarray, das Folgendes umfasst:

ein Frequenzmodulationsmodul (201, 301 401, 501, 601), das dazu ausgelegt ist, eine Frequenzmodulation zwischen einem Basisbandsignal und einem Zwischenfrequenzsignal durchzuführen,

ein Phasenverschiebungsmodul (202, 302 402, 502, 603), das mit dem Frequenzmodulationsmodul (201, 301 401, 501, 601) verbunden ist, wobei das Phasenverschiebungsmodul (202, 302, 402, 502, 603) einen ersten Koppler (2021, 3021, 6031) und einen Phasenverschieber (2022, 3022, 6032) umfasst, wobei das Phasenverschiebungsmodul dazu ausgelegt ist, zwischen dem Zwischenfrequenzsignal und einem reihengespeisten phasenverschobenen Signal eine reihengespeiste Phasenverschiebung durchzuführen, der erste Koppler mit dem Phasenverschieber in Reihe verbunden ist, der erste Koppler dazu ausgelegt ist, zwischen dem Zwischenfrequenzsignal und dem reihengespeisten phasenverschobenen Signal eine gerichtete Kopplung durchzuführen, und der Phasenverschieber dazu ausgelegt ist, zwischen dem Zwischenfrequenzsignal und dem reihengespeisten phasenverschobenen Signal eine Phasenverschiebung durchzuführen,

eine Arrayantenne (303, 403, 503, 605), die mit dem Phasenverschiebungsmodul (202, 302 402, 502, 603) verbunden ist, wobei die Arrayantenne (303, 403, 503, 605) eine erste Antenne (3031, 4031) und eine zweite Antenne (3032, 4032) umfasst,

ein Umwandlungsmodul (404, 504, 604), das mit dem Phasenverschiebungsmodul (202, 302, 402, 502, 603) und der Arrayantenne (303, 403, 503, 605) verbunden ist, wobei das Umwandlungsmodul (404, 504, 604) einen ersten Mischer (4041, 5041, 6041) umfasst,

ein lokales Oszillationsmodul (405, 505, 606), das mit dem Umwandlungsmodul (404, 504, 604) verbunden ist, wobei das lokale Oszillationsmodul (405, 505, 606) einen ersten lokalen Oszillator (4051, 5051, 6061) umfasst, und

einen Umschalter (602), der zwischen dem Phasenverschiebungsmodul (202, 302, 402, 502, 603) und dem Frequenzmodulationsmodul (201, 301 401, 501, 601) angeordnet ist, wobei der Umschalter (602) ein erstes Ende und ein zweites Ende umfasst, das erste Ende dazu ausgelegt ist, ein erstes Frequenzband des phasengesteuerten Dualbandarrays zu steuern, und das zweite Ende dazu ausgelegt ist, ein zweites Frequenzband des phasengesteuerten Dualbandarrays zu steuern;

wobei die erste Antenne dazu ausgelegt ist, ein Signal abzustrahlen, das dem ersten Frequenzband entspricht, wenn das erste Ende des Umschalters verbunden ist, und die zweite Antenne dazu ausgelegt ist, ein Signal abzustrahlen, das dem zweiten Frequenzband entspricht, wenn das zweite Ende des Umschalters verbunden ist,

wobei das lokale Oszillationsmodul dazu ausgelegt ist, eine lokale Oszillation für das Umwandlungsmodul bereitzustellen, derart, dass das Umwandlungsmodul eine Umwandlung zwischen dem reihengespeisten phasenverschobenen Signal und einem umgewandelten Signal durchführt,

wobei das reihengespeiste phasenverschobene Signal ein erstes reihengespeistes phasenverschobenes Signal und ein zweites reihengespeistes phasenverschobenes Signal umfasst, das umgewandelte Signal ein erstes umgewandeltes Signal umfasst, das erste reihengespeiste phasenverschobene Signal und das erste umgewandelte Signal sich an der ersten Antenne befinden und das zweite reihengespeiste phasenverschobene Signal sich an der zweiten Antenne befindet,

wobei der erste lokale Oszillator dazu ausgelegt ist, dem ersten Mischer eine erste lokale Oszillatoramplitude und eine erste lokale Oszillatorfrequenz bereitzustellen, derart, dass der erste Mischer zwischen dem ersten reihengespeisten phasenverschobenen Signal und dem ersten umgewandelten Signal eine Mischung durchführt,

wobei das phasengesteuerte Dualbandarray **dadurch gekennzeichnet ist, dass** wenn das Zwischenfrequenzsignal in das erste umgewandelte Signal umgewandelt wird, das erste Ende des Umschalters (602) verbunden wird, das Phasenverschiebungsmodul (202, 302, 402, 502, 603) dazu ausgelegt ist zu bewirken,

dass das Zwischenfrequenzsignal von einem ersten Ende des Phasenverschiebungsmoduls sequenziell durch den ersten Koppler (2021, 3021, 6031) und den Phasenverschieber (2022, 3022, 6032) geleitet wird, der erste Koppler (2021, 3021, 6031) einige Zwischenfrequenzsignale direkt an die erste Antenne (3031,4031) koppelt und der Phasenverschieber (2022, 3022, 6032) die verbleibenden Zwischenfrequenzsignale, die durch den ersten Koppler nicht direkt an die erste Antenne (3031, 4031) gekoppelt sind, mittels Phasenverschiebung zum ersten Koppler (2021, 3021, 6031) verschiebt, derart, dass die verbleibenden Zwischenfrequenzsignale unter Verwendung des ersten Kopplers an die erste Antenne (3031, 4031) gekoppelt werden, um das erste reihengespeiste phasenverschobene Signal zu erhalten, wobei das erste reihengespeiste phasenverschobene Signal als $a \cos[w_0 t + (n - 1)\varphi]$ markiert ist, a eine Amplitude des Frequenzmodulationsmoduls (201, 301, 401, 501, 601) ist, $w_0$ eine Frequenz des Frequenzmodulationsmoduls (201, 301, 401, 501, 601) ist, $\varphi$ eine Phasendifferenz ist, die vom Phasenverschieber (2022, 3022, 6032) bereitgestellt wird, t eine Zeitvariable ist und n eine Menge von Zweigen der ersten Antenne (3031, 4031) ist; der erste lokale Oszillator (4051, 5051, 6061) dazu ausgelegt ist, dem ersten Mischer (4041, 5041, 6041) eine erste lokale Oszillatoramplitude und eine erste lokale Oszillatorfrequenz bereitzustellen; und

das Umwandlungsmodul (404, 504, 604) dazu ausgelegt ist, das erste reihengespeiste phasenverschobene Signal unter Verwendung des ersten Mischers (4041, 5041, 6041) zu mischen, um das erste reihengespeiste phasenverschobene Signal in das erste umgewandelte Signal umzuwandeln, wobei das erste umgewandelte Signal als

$$\frac{a+b}{2}\cos[(w_0 + w_1)t + (n-1)\phi]$$ mar-

kiert ist, b die erste lokale Oszillatoramplitude ist und $w_1$ die erste lokale Oszillatorfrequenz ist;

und,

wenn das Zwischenfrequenzsignal in das zweite reihengespeiste phasenverschobene Signal umgewandelt wird, das zweite Ende des Umschalters (602) verbunden wird, das Phasenverschiebungsmodul (202, 302, 402, 502, 603) dazu ausgelegt ist zu bewirken, dass das Zwischenfrequenzsignal von einem zweiten Ende des Phasenverschiebungsmoduls (202, 302, 402, 502, 603) sequenziell durch den ersten Koppler (2021, 3021, 6031) und den Phasenverschieber (2022, 3022, 6032) geleitet wird, der erste Koppler (2021, 3021, 6031) einige Zwischenfrequenzsignale direkt an die zweite Antenne (3032, 4032) koppelt und der Phasenverschieber (2022, 3022, 6032) die verbleibenden Zwischenfrequenzsignale, die durch den ersten Koppler nicht direkt an die zweite Antenne (3032, 4032) gekoppelt sind, mittels Phasenverschiebung zum ersten Koppler (2021, 3021, 6031) verschiebt, derart, dass die verbleibenden Zwischenfrequenzsignale unter Verwendung des ersten Kopplers an die zweite Antenne (3032, 4032) gekoppelt werden, um das zweite reihengespeiste phasenverschobene Signal zu erhalten, wobei das zweite reihengespeiste phasenverschobene Signal als $a \cos[w_0 t + (m - 1)\varphi]$ markiert ist und m eine Menge von Zweigen der zweiten Antenne (3032, 4032) ist.

2. Phasengesteuertes Dualbandarray nach Anspruch 1, wobei

   das lokale Oszillationsmodul (405, 505, 606) ferner einen zweiten lokalen Oszillator umfasst;

   das umgewandelte Signal ferner ein zweites umgewandeltes Signal umfasst und das zweite umgewandelte Signal sich an der zweiten Antenne (3032, 4032) befindet; das Umwandlungsmodul (404, 504, 604) ferner einen zweiten Mischer (5042, 6042) umfasst und

   wobei der zweite lokale Oszillator dazu ausgelegt ist, dem zweiten Mischer (5042, 6042) eine zweite lokale Oszillatoramplitude und eine zweite lokale Oszillatorfrequenz bereitzustellen, derart, dass der zweite Mischer (5042, 6042) zwischen dem zweiten reihengespeisten phasenverschobenen Signal und dem zweiten umgewandelten Signal eine Mischung durchführt.

3. Phasengesteuertes Dualbandarray nach Anspruch 2, wobei

   wenn das zweite reihengespeiste phasenverschobene Signal in das zweite umgewandelte Signal umgewandelt wird, das zweite Ende des Umschalters (602) verbunden wird und das Umwandlungsmodul (404, 504, 604) dazu ausgelegt ist, das zweite reihengespeiste phasenverschobene Signal unter Verwendung des zweiten Mischers (5042, 6042) zu mischen, um das zweite reihengespeiste phasenverschobene Signal in das zweite umgewandelte Signal umzuwandeln, wobei das zweite umgewandelte Signal als $\frac{a+c}{2}\cos[(w_0 + w_2)t + (m-1)\phi]$ markiert ist, c die zweite lokale Oszillatoramplitude ist und $w_2$ die zweite lokale Oszillatorfrequenz ist.

4. Phasengesteuertes Dualbandarray nach Anspruch 1, wobei

   wenn das erste umgewandelte Signal in das Zwischenfrequenzsignal umgewandelt wird, das erste Ende des Umschalters (602) verbunden wird und das Umwandlungsmodul (404, 504, 604) dazu ausgelegt ist, das erste umgewandelte Signal unter Verwendung des ersten Mischers (4041, 5041, 6041) zu mischen, um das erste umgewandelte Signal in das erste reihengespeiste phasenverschobene Signal umzuwandeln, wobei das erste reihengespeiste phasenverschobene Signal als $a\cos[w_0 t + (n-1)\varphi]$ markiert ist; und
   das Phasenverschiebungsmodul (202, 302, 402, 502, 603) dazu ausgelegt ist, unter Verwendung des ersten Kopplers das erste reihengespeiste phasenverschobene Signal an das Phasenverschiebungsmodul (202, 302, 402, 502, 603) zu koppeln, um das Zwischenfrequenzsignal am Phasenverschiebungsmodul (202, 302, 402, 502, 603) zu erhalten.

5. Phasengesteuertes Dualbandarray nach Anspruch 4, wobei

   wenn das zweite umgewandelte Signal in das zweite reihengespeiste phasenverschobene Signal umgewandelt wird, das zweite Ende des Umschalters (602) verbunden wird und das Umwandlungsmodul (404, 504, 604) dazu ausgelegt ist, das zweite umgewandelte Signal unter Verwendung des zweiten Mischers (5042, 6042) zu mischen, um das zweite umgewandelte Signal in das zweite reihengespeiste phasenverschobene umgewandelte Signal umzuwandeln, wobei das zweite reihengespeiste phasenverschobene Signal als $a\cos[w_0 t + (m-1)\varphi]$ markiert ist.

6. Phasengesteuertes Dualbandarray nach Anspruch 5, wobei

   wenn das zweite reihengespeiste phasenverschobene Signal in das Zwischenfrequenzsignal umgewandelt wird, das zweite Ende des Umschalters (602) verbunden wird und das Phasenverschiebungsmodul (202, 302, 402, 502, 603) dazu ausgelegt ist, unter Verwendung des ersten Kopplers das zweite reihengespeiste phasenverschobene Signal an das Phasenverschiebungsmodul (202, 302, 402, 502, 603) zu koppeln, um das Zwischenfrequenzsignal am Phasenverschiebungsmodul (202, 302, 402, 502, 603) zu erhalten.

7. Phasengesteuertes Dualbandarray nach Anspruch 1, wobei das phasengesteuerte Dualbandarray ferner Folgendes umfasst: ein Lastmodul, das mit dem lokalen Oszillationsmodul (405, 505, 606) verbunden ist, wobei

   das Lastmodul dazu ausgelegt ist, verbleibende Energie zu absorbieren, nachdem das lokale Oszillationsmodul (405, 505, 606) eine lokale Oszillation bereitgestellt hat.

8. Phasengesteuertes Dualbandarray nach Anspruch 1, wobei das Umwandlungsmodul (404, 504, 604) ferner Folgendes umfasst: einen zweiten Koppler (6062), der mit dem lokalen Oszillationsmodul (405, 505, 606) verbunden ist, wobei

   der zweite Koppler dazu ausgelegt ist sicherzustellen, dass das lokale Oszillationsmodul (405, 505, 606) dem Umwandlungsmodul (404, 504, 604) eine konstante lokale Oszillation bereitstellt.

9. Phasengesteuertes Dualbandarray nach einem der Ansprüche 1 bis 8, wobei das phasengesteuerte Dualbandarray ferner Folgendes umfasst: ein Steuermodul, das mit dem Phasenverschiebungsmodul (202, 302, 402, 502, 603) verbunden ist, wobei

   das Steuermodul dazu ausgelegt ist, durch Anpassen der Phasendifferenz des Phasenverschiebers (2022, 3022, 6032) eine Strahlrichtung der Arrayantenne (303, 403, 503, 605) zu steuern.

## Revendications

1. Réseau à commande de phase à deux bandes, comprenant :

   un module de modulation de fréquence (201, 301, 401, 501, 601) qui est configuré pour effectuer une modulation de fréquence entre un signal en bande de base et un signal de fréquence intermédiaire,
   un module de déphasage (202, 302, 402, 502, 603) connecté au module de modulation de fréquence (201, 301, 401, 501, 601), le module de déphasage (202, 302, 402, 502, 603) comprenant un premier coupleur (2021, 3021, 6031) et un déphaseur (2022, 3022, 6032), le module de déphasage étant configuré pour effectuer un déphasage à alimentation en série entre le signal de fréquence intermédiaire et un signal de décalage à alimentation en série, le premier coupleur étant connecté en série au déphaseur, le premier coupleur étant configuré pour effectuer un couplage directionnel entre le signal de fréquence intermédiaire et le signal de décalage à alimentation en série, et le déphaseur étant configuré pour effectuer un décalage de phase entre le signal de fréquence intermédiaire et le signal de décalage à alimentation en série,
une antenne réseau (303, 403, 503, 605) connectée au module de déphasage (202, 302, 402, 502, 603), l'antenne réseau (303, 403, 503, 605) comprenant une première antenne (3031, 4031) et une seconde antenne (3032, 4032),
un module de conversion (404, 504, 604) connecté au module de déphasage (202, 302, 402, 502, 603) et à l'antenne réseau (303, 403, 503, 605), le module de conversion (404, 504, 604) comprenant un premier mélangeur (4041, 5041, 6041),
un module d'oscillation locale (405, 505, 606) connecté au module de conversion (404, 504, 604), le module d'oscillation locale (405, 505, 606) comprenant un premier oscillateur local (4051, 5051, 6061), et
un commutateur (602) qui est disposé entre le module de déphasage (202, 302, 402, 502, 603) et le module de modulation de fréquence (201, 301, 401, 501, 601), le commutateur (602) comprenant une première extrémité et une seconde extrémité, la première extrémité étant configurée pour commander une première bande de fréquences du réseau à commande de phase à deux bandes, et la seconde extrémité étant configurée pour commander une seconde bande de fréquences du réseau à commande de phase à deux bandes ;
la première antenne étant configurée pour émettre, lorsque la première extrémité du commutateur est connectée, un signal correspondant à la première bande de fréquences, et la seconde antenne étant configurée pour émettre, lorsque la seconde extrémité du commutateur est connectée, un signal correspondant à la seconde bande de fréquences,
le module d'oscillation locale étant configuré pour fournir une oscillation locale pour le module de conversion, de sorte que le module de conversion effectue une conversion entre le signal de décalage à alimentation en série et un signal converti,
le signal de décalage à alimentation en série comprenant un premier signal de décalage à alimentation en série et un second signal de décalage à alimentation en série, le signal converti comprenant un premier signal converti, le premier signal de décalage à alimentation en série et le premier signal converti étant situés sur la première antenne, et le second signal de décalage à alimentation en série étant situé sur la seconde antenne,
le premier oscillateur local étant configuré pour fournir une première amplitude d'oscillateur local et une première fréquence d'oscillateur local pour le premier mélangeur, de sorte que le premier mélangeur effectue un mélange entre le premier signal de décalage à alimentation en série et le premier signal converti,
le réseau à commande de phase à deux bandes étant **caractérisé en ce que** lorsque le signal de fréquence intermédiaire est converti dans le premier signal converti, la première extrémité du commutateur (602) est connectée, le module de déphasage (202, 302, 402, 502, 603) est configuré pour faire passer séquentiellement le signal de fréquence intermédiaire par le premier coupleur (2021, 3021, 6031) et le déphaseur (2022, 3022, 6032) depuis une première extrémité du module de déphasage, le premier coupleur (2021, 3021, 6031) couple directement des signaux de fréquences intermédiaires à la première antenne (3031, 4031) et le déphaseur (2022, 3022, 6032), déphase, vers le premier coupleur (2021, 3021, 6031) au moyen d'un décalage de phase, les signaux de fréquence intermédiaire restants qui ne sont pas directement couplés à la première antenne (3031, 4031) par le premier coupleur, de sorte que les signaux de fréquence intermédiaire restants sont couplés à la première antenne (3031, 4031) en utilisant le premier coupleur, pour obtenir le premier signal de décalage à alimentation en série, le premier signal de décalage à alimentation en série étant marqué comme $a \cos[w_0 t + (n\text{-}1)\phi]$, a étant une amplitude du module de modulation de fréquence (201, 301, 401, 501, 601), $w_0$ étant une fréquence du module de modulation de fréquence (201, 301, 401, 501, 601), $\phi$ étant une différence de phase fournie par le déphaseur (2022, 3022, 6032), t étant une variable temporelle et n étant une quantité de branches de la première antenne (3031, 4031) ;
le premier oscillateur local (4051, 5051, 6061) est configuré pour fournir une première amplitude d'oscillateur local et une première fréquence d'oscillateur local pour le premier mélangeur (4041, 5041, 6041) ; et
le module de conversion (404, 504, 604) est configuré pour mélanger le premier signal de décalage à alimentation en série en utilisant le premier mélangeur (4041, 5041, 6041), pour convertir le premier signal de décalage à alimentation en série dans le premier signal converti, le premier signal converti étant marqué comme

$$\frac{a+b}{2} \cos[(w_0 + w_1)t + (n-1)\phi],$$ b

étant la première amplitude d'oscillateur local, et $w_1$ étant la première fréquence d'oscillateur local, et

lorsque le signal de fréquence intermédiaire est converti dans le deuxième signal de décalage à alimentation en série, la deuxième extrémité du commutateur (602) est connectée, le module de déphasage (202, 302, 402, 502, 603) est configuré pour faire passer le signal de fréquence intermédiaire séquentiellement par le premier coupleur (2021, 3021, 6031) et le déphaseur (2022, 3022, 6032) d'une deuxième extrémité du module de déphasage (202, 302, 402, 502, 603), le premier coupleur (2021, 3021, 6031) couple directement certains signaux de fréquence intermédiaire à la deuxième antenne (3032, 4032) et le déphaseur (2022, 3022, 6032) déphase, vers le premier coupleur (2021, 3021, 6031) les signaux de fréquence intermédiaire restants qui ne sont pas directement couplés à la seconde antenne (3032, 4032) par le premier coupleur, de sorte que les signaux de fréquence intermédiaire restants sont couplés à la seconde antenne (3032, 4032) en utilisant le premier coupleur, pour obtenir le second signal de décalage à alimentation en série, le second signal de décalage à alimentation en série étant marqué comme $a\cos[w_0t + (m\text{-}1)\phi]$, et m étant une quantité des branches de la seconde antenne (3032, 4032).

2.  Réseau à commande de phase à deux bandes selon la revendication 1,
    le module d'oscillation locale (405, 505, 606) comprenant en outre un deuxième oscillateur local ;
    le signal converti comprenant en outre un second signal converti, et le second signal converti étant situé sur la seconde antenne (3032, 4032) ;
    le module de conversion (404, 504, 604) comprenant en outre un second mélangeur (5042, 6042) ; et
    le second oscillateur local étant configuré pour fournir une seconde amplitude d'oscillateur local et une seconde fréquence d'oscillateur local pour le second mélangeur (5042, 6042), de sorte que le second mélangeur (5042, 6042) effectue un mélange entre le second signal de décalage à alimentation en série et le second signal converti.

3.  Réseau à commande de phase à deux bandes selon la revendication 2,
    lorsque le deuxième signal de décalage à alimentation en série est converti dans le deuxième signal converti, la deuxième extrémité du commutateur (602) est connectée et le module de conversion (404, 504, 604) est configuré pour mélanger le deuxième signal de décalage à alimentation en série en utilisant le deuxième mélangeur (5042, 6042), pour convertir le second signal de décalage à alimentation en série dans le second signal converti, le second signal converti étant marqué comme

    $$\frac{a+c}{2}\cos[(w_0 + w_2)t + (m\text{-}1)\phi],$$ c étant la seconde amplitude d'oscillateur local, et $w_2$ étant la seconde fréquence d'oscillateur local.

4.  Réseau à commande de phase à deux bandes selon la revendication 1,
    lorsque le premier signal converti est converti dans le signal de fréquence intermédiaire, la première extrémité du commutateur (602) est connectée, et le module de conversion (404, 504, 604) est configuré pour mélanger le premier signal converti en utilisant le premier mélangeur (4041, 5041, 6041), pour convertir le premier signal converti dans le premier signal de décalage à alimentation en série, le premier signal de décalage à alimentation en série étant marqué comme $a\cos[w_0t + (n\text{-}1)\phi]$ et le module de déphasage (202, 302, 402, 502, 603) étant configuré pour coupler le premier signal de décalage à alimentation en série au module de déphasage (202, 302, 402, 502, 603) en utilisant le premier coupleur, pour obtenir le signal de fréquence intermédiaire sur le module de déphasage (202, 302, 402, 502, 603).

5.  Réseau à commande de phase à deux bandes selon la revendication 4,
    lorsque le second signal converti est converti dans le second signal de décalage à alimentation en série, la seconde extrémité du commutateur (602) est connectée, et le module de conversion (404, 504, 604) est configuré pour mélanger le second signal converti en utilisant le second mélangeur (5042, 6042), pour convertir le second signal converti dans le second signal de décalage à alimentation en série, le second signal de décalage à alimentation en série étant marqué comme $a\cos[w_0t + (m\text{-}1)\phi]$.

6.  Réseau à commande de phase à deux bandes selon la revendication 5,
    lorsque le deuxième signal de décalage à alimentation en série est converti dans le signal de fréquence intermédiaire, la deuxième extrémité du commutateur (602) est connectée, et le module de déphasage (202, 302, 402, 502, 603) est configuré pour coupler le deuxième signal de décalage à alimentation en série au module de déphasage (202, 302, 402, 502, 603) en utilisant le premier coupleur, pour obtenir le signal de fréquence intermédiaire sur le module de déphasage (202, 302, 402, 502, 603).

7.  Réseau à commande de phase à deux bandes selon la revendication 1, le réseau à commande de phase à deux bandes comprenant en outre : un module de charge connecté au module d'oscillation locale (405, 505, 606), le module de charge étant configuré pour absorber l'énergie restante après que le module d'oscillation locale (405, 505, 606) fournit une oscillation locale.

8.  Réseau à commande de phase à deux bandes selon la revendication 1, le module de conversion (404, 504, 604) comprenant en outre : un deuxième coupleur (6062) connecté au module d'oscillation local (405, 505, 606),

le deuxième coupleur étant configuré de telle sorte que le module d'oscillation locale (405, 505, 606) fournit une oscillation locale constante pour le module de conversion (404, 504, 604).

9. Réseau à commande de phase à deux bandes selon l'une quelconque des revendications 1 à 8, le réseau à commande de phase à deux bandes comprenant en outre : un module de commande connecté au module de déphasage (202, 302, 402, 502, 603), le module de commande étant configuré pour commander une direction de faisceau de l'antenne réseau (303, 403, 503, 605) en ajustant la différence de phase du déphaseur (2022, 3022, 6032).

FIG. 1

202

Phase shift module

201

2021

First coupler

Frequency modulation
module

2022

Phase shifter

FIG. 2

302

303

3021

Phase shift
module

Array antenna

301

First coupler

3031

First antenna

Frequency
modulation
module

3022

3032

Phase shifter

Second antenna

FIG. 3

```
┌─────────────────────────┐  ┌─ 401
│  Frequency modulation   │ ╱
│        module           │
└─────────────────────────┘
             │
┌─────────────────────────┐  ┌─ 402
│    Phase shift module    │ ╱
└─────────────────────────┘
             │
┌─────────────────────────┐  ┌─ 403
│      Array antenna       │ ╱
└─────────────────────────┘
             │
┌─────────────────────────┐  ┌─ 404
│    Conversion module     │ ╱
│                          │  ┌─ 4041
│  ┌────────────────────┐  │ ╱
│  │    First mixer     │  │
│  └────────────────────┘  │
└─────────────────────────┘
             │
┌─────────────────────────┐  ┌─ 405
│    Local oscillation     │ ╱
│         module           │  ┌─ 4051
│  ┌────────────────────┐  │ ╱
│  │ First local oscillator │ │
│  └────────────────────┘  │
└─────────────────────────┘
```

FIG. 4

**EP 3 211 807 B1**

FIG. 5

23

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6266011 B1

### Non-patent literature cited in the description

- **DANIAL EHYAIE.** *Novel Approaches to the Design of Phased Array Antennas,* 26 January 2012
- **M. KIM et al.** A heterodyne-scan phased-array antenna. *IEEE MICROWAVE AND GUIDED WAVE LETTERS,* vol. 9 (12), 535-537